# EUROPÄISCHE PATENTSCHRIFT

(11) **EP 4 227 129 B1**
(45) Veröffentlichungstag und Bekanntmachung des Hinweises auf die Patenterteilung: **22.10.2025**
(21) Anmeldenummer: 23020029.7
(22) Anmeldetag: 20.01.2023
(51) Int. Cl.: B60J 10/16, B29C 48/12, B29C 48/13, B29C 48/30, B29L 16/00, B29L 31/30

(54) **DICHTUNGS- UND KANTENSCHUTZPROFIL, VERFAHREN ZU DESSEN HERSTELLUNG UND EXTRUSIONSWERKZEUG**
SEALING AND EDGE PROTECTION PROFILE, METHOD FOR PRODUCING SAME AND EXTRUSION TOOL
PROFILÉ D'ÉTANCHÉITÉ ET DE PROTECTION DE BORD, SON PROCÉDÉ DE FABRICATION ET OUTIL D'EXTRUSION

(30) Priorität: 11.02.2022 DE 102022103216
(43) Veröffentlichungstag der Anmeldung: 16.08.2023
(73) Patentinhaber: CQLT SaarGummi Technologies S.à.r.l., 5544 Remich (LU)
(72) Erfinder: Grüter, Achim, 66780 Rehlingen-Siersburg (DE); Kotz, Stefan, 66663 Merzig (DE); Müller, Sven, 72764 Reutlingen (DE)
(74) Vertreter: Patentanwälte Bernhardt / Wolff Partnerschaft mbB

(56) Entgegenhaltungen:
- DE-U1- 202010 006 284
- US-A1- 2013 072 584
- US-B2- 9 586 356

## Beschreibung

Die Erfindung betrifft ein Dichtungs- oder Kantenschutzprofil nach dem Oberbegriff des Anspruchs 1, ein Verfahren zu dessen Herstellung sowie ein Extrusionswerkzeug.

Durch Benutzung sind Automobil-Dichtungsprofile zur Abdichtung einer Fahrzeugtür gegenüber einer Türöffnung einer Karosserie bekannt, welche einen im Querschnitt U-förmigen ersten Abschnitt in Form eines Befestigungsabschnitts zum Aufstecken auf einen Flansch der Karosserie und einen damit stoffschlüssig verbundenen zweiten Abschnitt in Form eines Dichtungsabschnitts, beispielsweise ein Hohlkammerprofil, umfassen. Um eine zuverlässige Befestigung an dem Flansch zu ermöglichen, ist der Befestigungsabschnitt aus einem Material gebildet, welches gegenüber dem Material des Dichtungsabschnitt eine größere Steifigkeit aufweist. Der Befestigungsabschnitt besteht in der Regel aus einem Kompakt- bzw. Hartanteil (Solidmischung) und der Dichtungsabschnitt aus einem zelligen Weichanteil (geschäumte Moosgummimischung), welche in einem Arbeitsschritt koextrudiert werden. Das Rohmaterial des zelligen Weichanteils beinhaltet in seiner chemischen Zusammensetzung (Rezeptur) dabei ein Treibmittel, welches im Extrusionsprozess während der Vulkanisation aufbläht und die zellige Struktur erzeugt. Hierbei verändert sich jedoch die Profilgeometrie, die ursprünglich durch die formgebende Düse des Extrusionswerkzeugs erzeugt wurde. Aus DE 20 2010 006 284 U1 und US 2013/0072584 A1 sind Dichtungsprofile bekannt, welche mit Luft gefüllte Mikroeinschlüsse umfassen. Die Mikroeinschlüsse werden über zugesetzte chemisch oder thermisch aktivierbare Treibmittel bei der Herstellung des Dichtungsprofils erzeugt.

Aufgabe der Erfindung ist es, ein einfach herstellbares Dichtungs- oder Kantenschutzprofil, welches mindestens zwei Abschnitte unterschiedlicher Steifigkeit aufweist, mit einer besonders maßhaltigen Außenkontur bereitzustellen.

Diese Aufgabe wird dadurch gelöst, dass ein erster Abschnitt und ein zweiter Abschnitt aus dem gleichen Material gebildet sind, wobei in dem zweiten Abschnitt vorzugsweise mechanisch erzeugte Aussparungen angeordnet sind, welche die Steifigkeit des zweiten Abschnitts gegenüber der Steifigkeit des ersten Abschnitts reduzieren. Hierdurch kann auf ein zusätzliches geschäumtes Material und somit auf den chemischen Prozess des Aufblähens verzichtet werden, wodurch sich auch der Aufbau des Extrusionswerkzeugs vereinfacht. Erfindungsgemäß weist der erste Abschnitt mit größerer Steifigkeit dabei eine geringere Dichte an Aussparungen auf als der zweite Abschnitt, wodurch sich die gegenüber dem zweiten Abschnitt größere Steifigkeit ergibt. Eine geringe Dichte an Aussparungen kann beispielsweise durch eine geringe Anzahl an Aussparungen pro Vergleichsvolumen oder durch ein geringeres Verhältnis von Volumen der Aussparungen pro Vergleichsvolumen erreicht werden.

Die Aussparungen können gezielt in bestimmte Abschnitte des (Voll-) Materials des Dichtungs- oder Kantenschutzprofils mechanisch eingebracht werden, wodurch sich dessen Steifigkeit reduziert und der Abschnitt aufgeweicht bzw. elastisch wird. Anders als beim chemischen Aufblähen, welches das gesamte Material betrifft, kann folglich durch mechanische Erzeugung der Aussparungen gezielt in bestimmten Abschnitten eines einheitlichen Materials eine poröse Struktur mit reduzierter Steifigkeit erzeugt werden.

Das Dichtungs- oder Kantenschutzprofil kann in Längsrichtung zumindest abschnittsweise eine konstante Außenkontur aufweisen. Insbesondere kann das Dichtungs- oder Kantenschutzprofil durch Extrusion als extrudiertes Strangprofil ausgebildet sein. Im Querschnitt und/oder in Längsrichtung des Dichtungs- oder Kantenschutzprofils können mehrere Abschnitte mit unterschiedlicher Steifigkeit vorgesehen sein, welche aneinander angrenzen. Hierdurch können beispielsweise im Querschnitt Bereiche mit reduzierter Steifigkeit, wie beispielsweise eine vorstehende Dichtlippe, erzeugt werden, welche an einen Abschnitt mit höherer Steifigkeit, wie beispielsweise einen Befestigungsabschnitt, angrenzen. Durch die Anordnung entsprechender Abschnitte mit unterschiedlicher Steifigkeit in Längsrichtung des Dichtungs- oder Kantenschutzprofils können beispielsweise Abschnitte mit reduzierter Steifigkeit in einem Längenabschnitt vorgesehen werden, welcher in der Einbausituation einem gewissen Biegeradius unterliegt und daher vorzugsweise weicher ausgebildet ist.

Die Aussparungen können als nach außen offene und/oder geschlossene Kammern ausgebildet seien, insbesondere in Form einer Kugel, eines Ovals, eines Zylinders oder eines Kanals, wobei entsprechende Kantenverrundungen vorgesehen sein können. Die Aussparungen können sich zudem zumindest abschnittsweise auch in Längsrichtung des Dichtungs- oder Kantenschutzprofils erstrecken, beispielsweise in Form eines Längskanals. Im Querschnitt des Dichtungs- oder Kantenschutzprofils kann jede Aussparung bevorzugt eine maximale Breite von höchstens 1,0 mm, insbesondere maximal 0,5 mm, besonders bevorzugt maximal 0,3 mm aufweisen. In Längsrichtung des Dichtungs- oder Kantenschutzprofils können die Aussparungen als durchgehende Längskanäle oder mit einer maximalen Länge von höchstens 5,0 mm, insbesondere maximal 3,0 mm, besonders bevorzugt maximal 1,0 mm ausgebildet sein. Das Verhältnis von maximaler Breite im Querschnitt zu maximaler Länge in Längsrichtung kann maximal 1/2, besonders bevorzugt maximal 1 /3 sein.

Um die Aussparungen während der Herstellung und auch in der späteren Verwendung zu stabilisieren, können die Aussparungen zumindest teilweise mit einem Füllmaterial gefüllt sein. Bei dem Füllmaterial kann es sich um ein Gas, eine Flüssigkeit oder einen Feststoff, beispielsweise ein Pulver, handeln. Das Füllmaterial wird vorzugsweise noch während der Extrusion in dem Extrusionswerkzeug dem Material des Dichtungs- oder Kantenschutzprofils hinzugefügt.

In einer weiteren vorteilhaften Ausführungsform sind die Aussparungen zumindest in einem Bereich des Dichtungs- oder Kantenschutzstrangs mindestens 0,03 mm, insbesondere 0,05 mm, besonders vorteilhaft mindestens 0,1 mm von einer Außenkontur des Dichtungs- oder Kantenschutzprofils entfernt angeordnet. Hierdurch wird eine stabile und besonders glatte Außenhaut erreicht, welche, vorteilhaft mit einer zusätzlich aufgebrachten Gleitschicht beispielsweise aus einem Fasermaterial, auch als Nutzschicht / Anlagefläche für ein weiteres Element wie eine bewegliche Fahrzeugscheibe verwendet werden kann.

Der zweite Abschnitt mit der durch die Aussparungen reduzierten Steifigkeit kann vorzugsweise in einem von dem Dichtungs- oder Kantenschutzprofil vorstehenden Abschnitt, beispielsweise einer vorstehenden Lippe, angeordnet sein. Hierdurch wird ermöglicht, dass entsprechende Funktionselemente mit notwendigerweise geringerer Steifigkeit dennoch aus dem gleichen Material und während eines einzigen Extrusionsschrittes zusammen mit dem übrigen Dichtungs- oder Kantenschutzprofil hergestellt werden können.

Das Dichtungs- oder Kantenschutzprofil kann einen im Querschnitt vorzugsweise L-förmigen oder U-förmigen Befestigungsabschnitt aufweisen, wobei der zweite Abschnitt mit der aufgrund der Aussparungen geringeren Steifigkeit in einem Schenkel des Befestigungsabschnitts angeordnet sein kann, insbesondere angrenzend zu einer Innenseite des jeweiligen Schenkels. Durch die Aussparungen weist dieser Bereich des Schenkels eine geringere Steifigkeit auf und ermöglicht damit eine besonders gute, vollflächige Anlage beispielsweise an einen Karosserieflansch. Wird ein Klebstoff, insbesondere ein Klebstoffband, an der Oberfläche des zweiten Abschnitts vorgesehen kann dieser Klebstoff besonders vollflächig an der zumeist unebenen Oberfläche des Karosserieflansches anliegen, wodurch sich eine besonders stabile Befestigung ergibt.

Vorteilhaft handelt es sich bei dem Material des ersten Abschnitts und des zweiten Abschnitts um ein thermoplastisches Elastomer (TPE) oder um EPDM.

Des Weiteren wird ein Verfahren zur Herstellung des zuvor beschriebenen Dichtungs- oder Kantenschutzprofils beansprucht, welches mindestens einen ersten Abschnitt mit einer ersten Steifigkeit und mindestens einen zweiten Abschnitt mit einer gegenüber der ersten Steifigkeit geringeren zweiten Steifigkeit umfasst. Die Abschnitte werden dabei mittels Extrusion aus dem gleichen Material gebildet und bei der Extrusion werden Aussparungen in dem Material des zweiten Abschnitts vorgesehen, wodurch sich die Steifigkeit reduziert. Hierdurch kann in einem einzigen Extrusionsschritt und aus einem einzigen Material ein Dichtungs- oder Kantenschutzprofil hergestellt werden, welches abschnittsweise unterschiedliche Steifigkeiten aufweist.

Vorteilhaft können die Aussparungen in einem Extrusionswerkzeug durch mindestens einen Verdrängungskörper, insbesondere einen Fadenzopf oder eine Nadel, gebildet werden. Die Nadel kann dabei vorzugsweise in Längsrichtung des Dichtungs- oder Kantenschutzprofils oder in einem Winkel hierzu, beispielsweise rechtwinklig hierzu, bewegt werden, insbesondere in einer vorzugsweise periodisch oszillierenden Vor- und Rückwärtsbewegung. Alternativ oder zusätzlich kann eine Injektionseinheit vorgesehen sein, welche ein Gas (z.B. Luft), ein Fluid oder einen Festkörper (z.B. Pulver) in das Material des Dichtungs- oder Kantenschutzprofils bei der Extrusion zuführt, um die Aussparungen zu bilden oder um durch den vorgenannten Verdrängungskörper gebildete Aussparungen zumindest teilweise zu befüllen. Das injizierte Material stellt eine definierte Porosität ein und stabilisiert gleichzeitig den Profilquerschnitt. Es ist auch möglich, zur Bildung der Aussparungen in dem Extrusionswerkzeug ionisierte Strahlung zu verwenden.

Des Weiteren wird auch ein Extrusionswerkzeug zum Extrudieren eines Dichtungs- oder Kantenschutzprofils, insbesondere für ein Kraftfahrzeug, mit einer Düse beansprucht, durch welche Material des Dichtungs- oder Kantenschutzprofils beim Extrudieren herausdrückbar ist. Das Extrusionswerkzeug umfasst mehrere Verdrängungskörper, die als Fadenzopf und/oder als Nadel ausgebildet sind, zum Verdrängen von Material, während der Extrusion oder unmittelbar im Anschluss.

Der Verdrängungskörper kann dabei vorzugsweise in der Düse des Extrusionswerkzeugs angeordnet sein und sich gegebenenfalls auch noch aus dem Extrusionswerkzeug heraus erstrecken. Hierdurch wird eine maßhaltige Außenkontur des Dichtungs- oder Kantenschutzprofils und Innenkontur der Aussparungen erreicht.

Der Verdrängungskörper kann als Fadenzopf (Faden) ausgebildet sein, dessen erstes Ende in der dem Extrusionswerkzeug, insbesondere in der Düse, befestigt ist und dessen entgegengesetztes Ende sich vorzugsweise auch außerhalb der Düse erstreckt. Der Fadenzopf wird von dem austretenden Material umströmt und bildet damit eine Aussparung in Form eines Längskanals in dem Dichtungs- oder Kantenschutzprofil. Der Fadenzopf kann sich bis zu einer nachfolgenden Vulkanisationsvorrichtung erstrecken, um die Aussparungen bis in den Vulkanisationsprozess hinein zu stabilisieren. Eine entsprechende Anordnung des beschriebenen Extrusionswerkzeugs und einer nachfolgenden Vulkanisationsvorrichtung stellt eine eigenständige Erfindung dar. Alternativ kann anstelle eines Fadenzopfs auch eine Schnur oder ein Schlauch vorgesehen sein, welche an dem Extrusionswerkzeug bzw. der Düse befestigt sind oder fortlaufend zugeführt werden und in dem Dichtungs- oder Kantenschutzprofil gegebenenfalls verbleiben. Durch einen Schlauch, welcher in dem Extrusionswerkzeug befestigt ist und sich vorteilhaft aus dem Extrusionswerkzeug heraus erstreckt, kann sowohl die Aussparung stabilisiert als auch zusätzlich ein Füllmaterial hinzugefügt werden. Je nach der Länge des Schlauchs kann dabei die eigentliche Injektion auch außerhalb des Extrusionswerkzeugs stattfinden, beispielsweise wenn das Material des Dichtungs- oder Kantenschutzprofils auf eine gewünschte Temperatur abgekühlt ist.

Zusätzlich oder alternativ kann auch ein Verdrängungskörper in Form mindestens einer Nadel vorgesehen sein, welche vorzugsweise in Extrusionsrichtung oder in einem Winkel hierzu, beispielsweise rechtwinklig zur Extrusionsrichtung, angeordnet und gegebenenfalls auch vorzugsweise periodisch oszillierend beweglich ist. Die Nadel kann dabei vorteilhaft im Extrusionswerkzeug integriert sein und in axialer Richtung bei hoher Frequenz die geometrischen Aussparungen erzeugen. Alternativ kann auch mindestens eine Nadel am Ausgang des Extrusionswerkzeugs vorgesehen sein, welche von dem austretenden Material des Dichtungs- und Kantenschutzprofils umströmt wird und so die Aussparungen erzeugt werden. Der Verdrängungskörper und die Injektionseinheit ermöglichen, die partielle Strukturänderung durch die Aussparungen in dem Dichtungs- oder Kantenschutzprofil radial und axial exakt einzustellen.

Weitere Besonderheiten und Vorzüge der Erfindung ergeben sich aus der folgenden Beschreibung bevorzugter Ausführungsbeispiele anhand der Zeichnungen. Es zeigen:
- Fig. 1: einen Querschnitt durch eine erste Ausführungsform eines Dichtungsprofils;
- Fig. 2: eine perspektivische Darstellung des Dichtungsprofils von Figur 1;
- Fig. 3: einen Querschnitt durch eine zweite Ausführungsform eines Dichtungsprofils;
- Fig. 4: eine Detailansicht der Darstellung von Figur 3;
- Fig. 5: eine Draufsicht auf eine Düse eines Extrusionswerkzeugs und
- Fig. 6: einen Querschnitt durch die Düse von Figur 5.

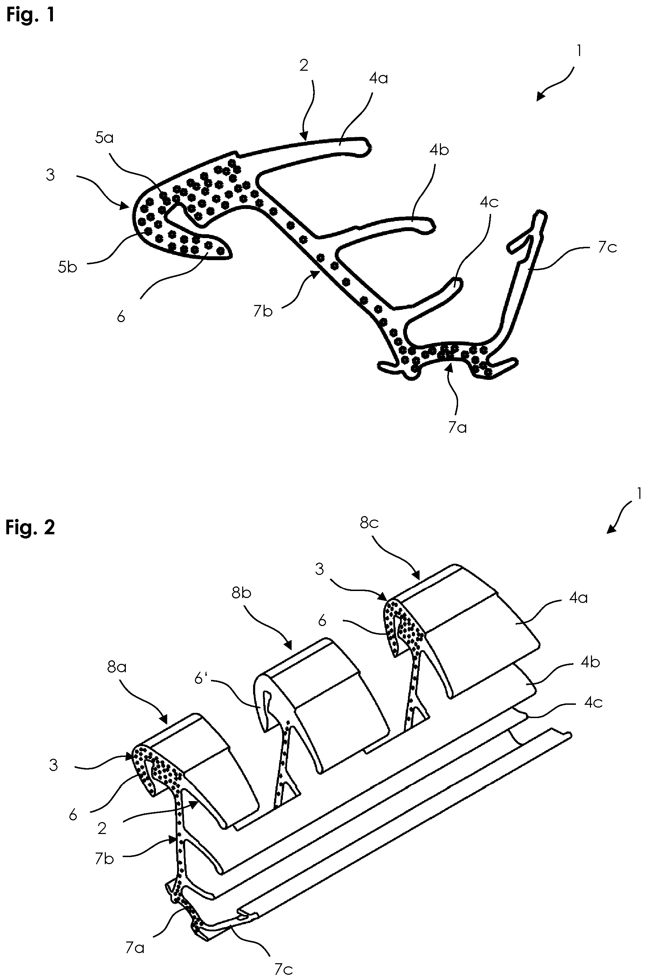

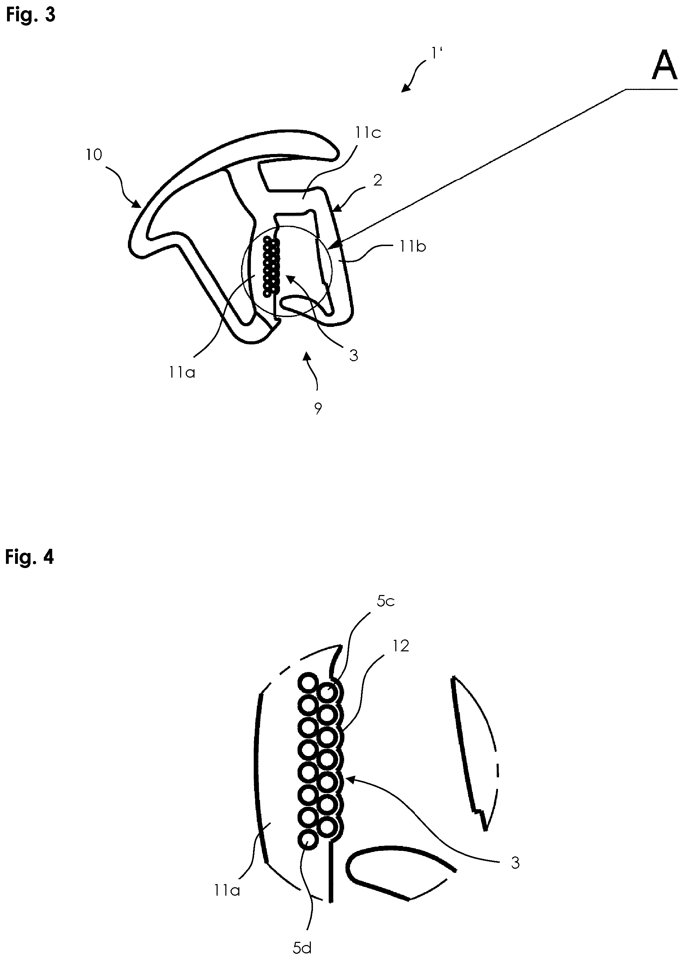

In Figur 1 ist ein Querschnitt durch eine erste Ausführungsform eines Dichtungsprofils 1 für ein Kraftfahrzeug gezeigt. Derartige Dichtungsprofile werden wie auch das in den Figuren 3 und 4 beschriebene Dichtungsprofil im Extrusionsverfahren gebildet und weisen daher in Längsrichtung zumindest abschnittsweise eine gleichbleibende Außenkontur auf.

Wie der Darstellung zu entnehmen ist, umfasst das Dichtungsprofil 1 im Querschnitt mehrere Abschnitte, von welchen hier ein erster Abschnitt 2 und ein zweiter Abschnitt 3 beziffert sind. Der erste Abschnitt 2, welcher eine von mehreren Haltelippen 4a, 4b, 4c bildet, ist als Hartanteil ohne Aussparungen ausgebildet, wohingegen der zweite Abschnitt eine Vielzahl von Aussparungen aufweist, von welchen exemplarisch die Aussparungen 5a, 5b beziffert sind. Durch die Aussparungen 5a, 5b ist die Steifigkeit in dem zweiten Abschnitt 3 gegenüber der Steifigkeit des ersten Abschnitts 2 reduziert. Demnach kann durch die Anordnung und die Dichte der Aussparungen 5a, 5b die Steifigkeit des Materials des Dichtungsprofils 1 im Querschnitt gezielt eingestellt werden, beispielsweise um eine Dichtlippe 6 ausreichend weich auszubilden. Neben dem zweiten Abschnitt 3 können noch weitere Abschnitte im Querschnitt des Dichtungsprofils 1 vorgesehen sein, welche durch Aussparungen eine reduzierte Steifigkeit aufweisen. In dem gezeigten Ausführungsbeispiel sind entsprechende Abschnitte in einem Schenkel 7a, in welchem die Dichte an Aussparungen in etwa derjenigen im zweiten Abschnitt 3 entspricht, und in einem Schenkel 7b mit einer geringeren Dichte an Aussparungen vorgesehen. Folglich ist die Steifigkeit des Schenkel 7a geringer als die Steifigkeit des Schenkel 7b. Ein Schenkel 7c ist wie der erste Abschnitt 2 frei von Aussparungen und weist folglich die höchste Steifigkeit auf.

Bei dem Vergleich der Steifigkeit wird lediglich die Steifigkeit des Werkstoffs in einem Vergleichsvolumen berücksichtigt, nicht jedoch die Geometrie, sodass die Materialsteifigkeit in den verschiedenen Abschnitten unabhängig von der Geometrie vergleichbar ist.

In Figur 2 ist eine perspektivische Schnittdarstellung des Dichtungsprofils 1 von Figur 1 gezeigt. Zur besseren Erkennbarkeit der Anordnung der Aussparungen innerhalb des Dichtungsprofils 1 sind zwei Ausklinkungen in dem eigentlich durchgängigen Dichtungsprofil 1 mit konstanter Außenkontur dargestellt. Die Ausklinkungen unterteilen das Dichtungsprofil 1 in die Längenabschnitte 8a, 8b und 8c. Wie der Darstellung zu nehmen ist, erstrecken sich die Aussparungen zumindest des zweiten Abschnitts 3 nicht entlang der gesamten Längsrichtung des Dichtungsprofils 1. Vielmehr ist zwischen dem Längenabschnitt 8a und 8c, in welchen der zweite Abschnitt 3 mit den Aussparungen vorgesehen ist und unter anderem die Dichtlippe 6 bildet, ein Längenabschnitt 8b vorgesehen, welcher ebenfalls eine Dichtlippe 6' mit zu der Dichtlippe 6 identischer Außenkontur aufweist, jedoch keine Aussparungen umfasst. Ein derartiges Dichtungsprofil 1 ist besonders gut geeignet, im Bereich der Längenabschnitte 8a, 8c in der Einbausituation an der Fahrzeugkarosserie in einem Radius verlegt zu werden. Wie insbesondere dem Vergleich der Schenkel 7a, 7b und 7c zu entnehmen ist, kann durch die Dichte an Aussparungen die Steifigkeit des im Übrigen identischen Materials gezielt eingestellt werden.

Zumindest ein Teil der Aussparungen kann sich wie gezeigt lediglich abschnittsweise in Längsrichtung des Dichtungsprofils 1 erstrecken, sodass zusammen mit der individuellen Anordnung der Aussparungen im Querschnitt die Steifigkeit sowohl radial als auch in Längsrichtung des Dichtungsprofils 1 variabel eingestellt werden kann. In einer nicht dargestellten Ausführungsform können die Aussparungen zudem mit einem Füllmaterial gefüllt sein, wodurch in Abhängigkeit des gewählten Füllmaterials die Steifigkeit weiter beeinflusst werden kann.

In Figur 3 ist ein Querschnitt durch eine zweite Ausführungsform eines Dichtungsprofils 1' gezeigt. Das Dichtungsprofil 1' umfasst einen U-förmigen Befestigungsabschnitt 9 zum Aufstecken des Dichtungsprofil 1' auf einen Flansch einer Fahrzeugkarosserie sowie einen damit stoffschlüssig verbundenen Dichtungsabschnitt 10 in Form eines Hohlkammerprofils. Der Dichtungsabschnitt 10 kann aus einem geschäumten Moosgummi mittels Koextrusion zusammen mit dem beispielsweise aus einem thermoplastischen Elastomer gebildeten Befestigungsabschnitt 9 hergestellt werden.

Der Befestigungsabschnitt 9 umfasst zwei Schenkel 11a, 11b, welche über einen Basisschenkel 11c miteinander verbunden sind. Ein erster Abschnitt 2 mit größerer Steifigkeit wird durch die Schenkel 11b, 11c gebildet. An der Innenseite des Schenkels 11a, welche dem gegenüberliegenden Schenkel 11b bzw. dem angrenzenden Schenkel 11c zugewandt ist, ist ein zweiter Abschnitt 3 mit reduzierter Steifigkeit vorgesehen, welcher in Bezug auf die nachfolgende Figur näher erläutert wird.

In Figur 4 ist eine Detailansicht des Bereichs A von Figur 3 gezeigt. Wie dort zu nehmen ist, sind in dem zweiten Abschnitt 3 mehrere Aussparungen vorgesehen, von welchen hier die Aussparungen 5c, 5d exemplarisch beziffert sind. Die Aussparungen angrenzend an die Innenseite des Schenkels 11a stehen dabei gegenüber der übrigen Kontur der Innenseite vor und bilden insbesondere eine unebene, gewellte Oberfläche. Durch die reduzierte Steifigkeit in dem zweiten Abschnitt 3 aufgrund der Aussparungen 5c, 5d ist dieser Bereich im Verhältnis zu dem Abschnitt 2 weicher und kann sich besonders gut an eine oftmals unebene Oberfläche eines Karosserieflansches anpassen. Wird auf der Außenkontur des zweiten Abschnitts 3 ein Klebstoff 12 vorgesehen, kommt dieser vollflächig zur Anlage an dem hier nicht dargestellten Karosserieflansch und ermöglicht eine besonders stabile Befestigung des Dichtungsprofils 1' an dem Karosserieflansch.

Bei den gezeigten Ausführungsbeispielen kann durch die definierte Anordnung der Aussparungen insbesondere sichergestellt werden, dass die Aussparungen im Querschnitt einen ausreichenden Abstand von der Außenkontur des Dichtungsprofils 1, 1' entfernt angeordnet sind. Hierdurch kann eine stabile Außenhaut gewährleistet werden. Auch kann die Anordnung der Aussparungen einer vorgegebenen geometrischen Struktur folgen und insbesondere bionisch bzw. bezüglich des Kraftflusses optimiert sein. Um eine definierte Reduzierung der Steifigkeit zu erreichen, kann insbesondere vorgesehen sein, dass in einer, mehrerer oder allen Richtungen kein geradliniger Steg durch den mittels Aussparungen geschwächten Abschnitt führt. Als Material für den ersten Abschnitt und den zweiten Abschnitt kommt beispielsweise thermoplastisches Elastomer oder EPDM infrage.

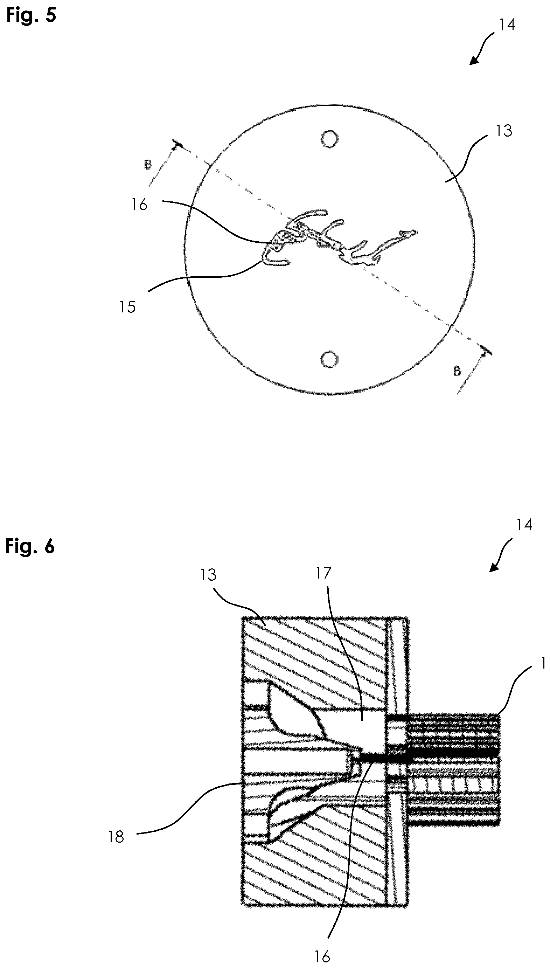

In Figur 5 ist eine Draufsicht auf eine Düse 13 eines Extrusionswerkzeugs 14 gezeigt. Die Düse 13 umfasst einen Düsenschlitz 15, welcher der Außenkontur des zu extrudierenden Dichtungsprofils entspricht. Innerhalb des Düsenschlitzes 15 sind bei dem gezeigten Ausführungsbeispiel mehrere Fadenzöpfe angeordnet, von welchen hier der Fadenzopf 16 beziffert ist.

In Figur 6 ist ein Querschnitt durch die Düse 13 des Extrusionswerkzeugs 14 von Figur 5 entlang der Linie B-B gezeigt. In der Düse 13 ist ein Strömungskanal 17 angeordnet, durch welchen das Rohmaterial für das Dichtungsprofil 1 strömt und unter Druck herausgedrückt wird, um das Dichtungsprofil 1 zu bilden. Um die Fadenzöpfe, von welchen hier wieder der Fadenzopf 16 beziffert ist, in dem Strömungskanal 17 positionsgenau zu halten, ist eine Haltevorrichtung 18 in dem Strömungskanal 17 vorgesehen. Durch die Reibung mit dem Material des Dichtungsprofils 1 sind die Fadenzöpfe in Extrusionsrichtung orientiert und bilden damit Aussparungen in Form von Längskanälen in dem Dichtungsprofil 1. In Abhängigkeit von der Querschnittsform des Fadenzopfs können folglich Aussparungen mit unterschiedlichster Querschnittsform erzeugt werden, beispielsweise mit kreisrundem, ovalem, dreieckigem, quadratischem, rechteckigem oder mehreckigem Querschnitt.

In einer nicht dargestellten alternativen Ausführungsform kann zusätzlich oder alternativ zu den Fadenzöpfen auch mindestens ein Verdrängungskörper beispielsweise in Form einer Nadel vorgesehen sein, welche in der Düse 13 in den Strömungskanal vorteilhaft nahe einer Austrittsseite der Düse 13 vorsteht; vorzugsweise in Extrusionsrichtung orientiert oder in einem Winkel zu der Extrusionsrichtung, insbesondere rechtwinklig zur Extrusionsrichtung. Es ist jedoch auch möglich, mindestens eine Nadel in Extrusionsrichtung hinter der Düse 13 vorzusehen. Die Nadel kann dabei in jedem Fall feststehend oder beweglich, insbesondere periodisch oszillierend ausgebildet sein, um in Längsrichtung des Dichtungsprofils 1 voneinander beabstandete Aussparungen zu bilden. Alternativ oder zusätzlich kann eine hier nicht dargestellte Injektionseinheit vorgesehen sein, welche ein Gas, ein Fluid und/oder einen Festkörper in das Material des Dichtungsprofils 1 zuführt und hierdurch Aussparungen bildet.

### Bezugszeichenliste:

- 1, 1': Dichtungsprofil
- 2: Erster Abschnitt
- 3: Zweiter Abschnitt
- 4a, 4b, 4c: Haltelippe
- 5a, 5b, 5c, 5d: Aussparung
- 6, 6': Dichtlippe
- 7a, 7b, 7c: Schenkel
- 8a, 8b, 8c: Längenabschnitt
- 9: Befestigungsabschnitt
- 10: Dichtungsabschnitt
- 11a, 11b, 11c: Schenkel
- 12: Klebstoff
- 13: Düse
- 14: Extrusionswerkzeug
- 15: Düsenschlitz
- 16: Fadenzopf
- 17: Strömungskanal
- 18: Haltevorrichtung

## Patentansprüche

1. Dichtungs- oder Kantenschutzprofil (1; 1'), insbesondere zur Abdichtung einer Fahrzeugtür gegenüber einer Türöffnung einer Karosserie, umfassend mindestens einen ersten Abschnitt (2) mit einer ersten Steifigkeit und mindestens einen zweiten Abschnitt (3) mit einer gegenüber der ersten Steifigkeit geringeren zweiten Steifigkeit,
wobei die Abschnitte (2; 3) aus dem gleichen Material gebildet sind und in dem Material des zweiten Abschnitts (3) Aussparungen (5a; 5b; 5c; 5d) vorgesehen sind, welche die Steifigkeit reduzieren
**dadurch gekennzeichnet,**
**dass** in dem ersten Abschnitt (2) mit größerer Steifigkeit und dem zweiten Abschnitt (3) mit geringerer Steifigkeit Aussparungen (5a; 5b) vorgesehen sind, wobei die Dichte an Aussparungen (5a; 5b) in dem zweiten Abschnitt (3) größer ist.

2. Dichtungs- oder Kantenschutzprofil (1; 1') nach Anspruch 1,
**dadurch gekennzeichnet,**
**dass** das Dichtungs- oder Kantenschutzprofil (1; 1') in Längsrichtung zumindest abschnittsweise eine konstante Außenkontor aufweist und insbesondere als Extrusionsprofil ausgebildet ist.

3. Dichtungs- oder Kantenschutzprofil (1; 1') nach Anspruch 1 oder 2,
**dadurch gekennzeichnet,**
**dass** im Querschnitt und/oder in Längsrichtung des Dichtungs- oder Kantenschutzprofils (1; 1') Abschnitte (8a; 8b; 8c) mit unterschiedlicher Steifigkeit aneinander angrenzen.

4. Dichtungs- oder Kantenschutzprofil (1; 1') nach einem der vorhergehenden Ansprüche,
**dadurch gekennzeichnet,**
**dass** die Aussparungen (5a; 5b; 5c; 5d) durch nach außen offene und/oder geschlossene Kammern gebildet werden und insbesondere in Form einer Kugel, eines Ovals, eines Zylinders oder eines Kanals ausgebildet sind.

5. Dichtungs- oder Kantenschutzprofil (1; 1') nach einem der vorhergehenden Ansprüche,
**dadurch gekennzeichnet,**
**dass** die Aussparungen (5a; 5b; 5c; 5d) mindestens 0,05 mm, insbesondere mindestens 0,1 mm von einer Außenkontur des Dichtungs- oder Kantenschutzprofils (1; 1 ') entfernt angeordnet sind.

6. Dichtungs- oder Kantenschutzprofil (1) nach einem der vorhergehenden Ansprüche,
**dadurch gekennzeichnet,**
**dass** der zweite Abschnitt (3) durch eine im Querschnitt vorstehende Lippe (6) gebildet wird.

7. Dichtungs- oder Kantenschutzprofil (1') nach einem der vorhergehenden Ansprüche,
**gekennzeichnet durch**
einen im Querschnitt vorzugsweise L-förmigen oder U-förmigen Befestigungsabschnitt (9), wobei der zweite Abschnitt (3) mit geringerer Steifigkeit in einem Schenkel (11a) des Befestigungsabschnitts (9), insbesondere angrenzend zu einer Innenseite, angeordnet ist.

8. Verfahren zur Herstellung eines Dichtungs- oder Kantenschutzprofils nach einem der Ansprüche 1 bis 7, umfassend mindestens einen ersten Abschnitt (2) mit einer ersten Steifigkeit und mindestens einen zweiten Abschnitt (3) mit einer gegenüber der ersten Steifigkeit geringeren zweiten Steifigkeit,
wobei die Abschnitte (2; 3) mittels Extrusion aus dem gleichen Material gebildet werden,
**dadurch gekennzeichnet,**
**dass** bei der Extrusion Aussparungen (5a; 5b) in dem Material des ersten Abschnitts (2) und des zweiten Abschnitts (3) vorgesehen werden, wobei die Dichte an Aussparungen (5a; 5b) in dem zweiten Abschnitt (3) größer ist.

9. Verfahren nach Anspruch 8,
**dadurch gekennzeichnet,**
**dass** die Aussparungen (5a; 5b) in einem Extrusionswerkzeug (14) durch mindestens einen Verdrängungskörper, insbesondere einen Fadenzopf (16) oder eine Nadel, welche vorzugsweise in Längsrichtung des Dichtungs- oder Kantenschutzprofils (1; 1') oder in einem Winkel hierzu beweglich ist, und/oder eine Injektionseinheit, welche ein Gas, ein Fluid und/oder einen Festkörper zuführt, gebildet werden.

10. Extrusionswerkzeug (14) zum Extrudieren eines Dichtungs- oder Kantenschutzprofils (1; 1') nach einem der Ansprüche 1 bis 7, mit einer Düse (13), durch welche Material des Dichtungs- oder Kantenschutzprofils (1; 1') beim Extrudieren herausdrückbar ist, und
mindestens einen Verdrängungskörper (16) zum Verdrängen von Material , **dadurch gekennzeichnet,**
**dass** mehrere Verdrängungskörper (16) zur Bildung der Aussparungen (5a; 5b) in dem ersten Abschnitt (2) und dem zweiten Abschnitt (3) vorgesehen und als Fadenzopf (16) und/oder als Nadel ausgebildet sind.

11. Extrusionswerkzeug (14) nach Anspruch 10,
**dadurch gekennzeichnet,**
**dass** der Verdrängungskörper (16) in der Düse (13) oder angrenzend hieran angeordnet ist.

12. Extrusionswerkzeug (14) nach Anspruch 10 oder 11,
**dadurch gekennzeichnet,**
**dass** die Injektionseinheit in der Düse (13) angeordnet ist.

13. Extrusionswerkzeug (14) nach einem der Ansprüche 10 bis 12,
**dadurch gekennzeichnet,**
**dass** der Fadenzopf (16) sich auch außerhalb der Düse (13) erstreckt.

14. Extrusionswerkzeug (14) nach einem der Ansprüche 10 bis 13,
**dadurch gekennzeichnet,**
**dass** die Nadel in Extrusionsrichtung oder in einem Winkel hierzu, vorzugsweise rechtwinklig zur Extrusionsrichtung, beweglich ist.

## Claims

1. Sealing or edge protection profile (1; 1'), in particular for sealing a vehicle door in relation to a door opening of a vehicle body, comprising at least one first portion (2) having a first stiffness and at least one second portion (3) having a second stiffness less than the first stiffness,
wherein the portions (2; 3) are formed of the same material, and recesses (5a; 5b; 5c; 5d) that reduce the stiffness are provided in the material of the second portion (3),
**characterized in that**
recesses (5a; 5b) are provided in the first portion (2) of greater stiffness and in the second portion (3) of lesser stiffness, the density of recesses (5a; 5b) being greater in the second portion (3).

2. Sealing or edge protection profile (1; 1') according to Claim 1,
**characterized in that**
the sealing or edge protection profile (1; 1') in the longitudinal direction, at least in sections, has a constant outer counter and is designed in particular as an extrusion profile.

3. Sealing or edge protection profile (1; 1') according to Claim 1 or 2,
**characterized in that**
portions (8a; 8b; 8c) of varying stiffness are adjacent to one another in cross section and/or in the longitudinal direction of the sealing or edge protection profile (1; 1').

4. Sealing or edge protection profile (1; 1') according to any one of the preceding claims,
**characterized in that**
the recesses (5a; 5b; 5c; 5d) are formed by outwardly open and/or closed chambers and are designed in particular in the form of a sphere, an oval, a cylinder or a channel.

5. Sealing or edge protection profile (1; 1') according to any one of the preceding claims,
**characterized in that**
the recesses (5a; 5b; 5c; 5d) are arranged at least 0.05 mm, in particular at least 0.1 mm, away from an outer contour of the sealing or edge protection profile (1; 1').

6. Sealing or edge protection profile (1) according to any one of the preceding claims,
**characterized in that**
the second portion (3) is formed by a protruding lip (6) in cross section.

7. Sealing or edge protection profile (1') according to any one of the preceding claims,
**characterized by**
a fastening portion (9) of preferably L-shaped or U-shaped cross section, wherein the second portion (3) of lesser stiffness is arranged in a leg (11a) of the fastening portion (9), in particular adjacent to an inner face.

8. Method for producing a sealing or edge protection profile according to any one of Claims 1 to 7, comprising at least one first portion (2) having a first stiffness and at least one second portion (3) having a second stiffness less than the first stiffness,
wherein the portions (2; 3) are formed by extrusion from the same material,
**characterized in that**
during extrusion, recesses (5a; 5b) are provided in the material of the first portion (2) and of the second portion (3), the density of recesses (5a; 5b) being greater in the second portion (3).

9. Method according to Claim 8,
**characterized in that**
the recesses (5a; 5b) are formed in an extrusion tool (14) by at least one displacement body, in particular a thread braid (16) or a needle, which is preferably movable in the longitudinal direction of the sealing or edge protection profile (1; 1') or at an angle thereto, and/or an injection unit which supplies a gas, a fluid and/or a solid.

10. Extrusion tool (14) for extruding a sealing or edge protection profile (1; 1') according to any one of Claims 1 to 7, having a nozzle (13) through which material of the sealing or edge protection profile (1; 1') can be pressed during extrusion, and
at least one displacement body (16) for displacing material, **characterized in that**
a plurality of displacement bodies (16) are provided for forming the recesses (5a; 5b) in the first portion (2) and in the second portion (3) and are designed as a thread braid (16) and/or as a needle.

11. Extrusion tool (14) according to Claim 10,
**characterized in that**
the displacement body (16) is arranged in the nozzle (13) or adjacent thereto.

12. Extrusion tool (14) according to Claim 10 or 11,
**characterized in that**
the injection unit is arranged in the nozzle (13).

13. Extrusion tool (14) according to any one of Claims 10 to 12,
**characterized in that**
the thread braid (16) also extends outside the nozzle (13).

14. Extrusion tool (14) according to any one of Claims 10 to 13,
**characterized in that**
the needle is movable in the extrusion direction or at an angle thereto, preferably at right angles to the extrusion direction.

## Revendications

1. Profilé d'étanchéité ou de protection de bord (1 ; 1'), en particulier pour la fermeture étanche d'une porte de véhicule par rapport à une ouverture de porte d'une carrosserie, comprenant au moins une première section (2) pourvue d'une première rigidité et au moins une deuxième section (3) pourvue d'une deuxième rigidité inférieure à la première rigidité,
les sections (2 ; 3) étant constituées du même matériau et des évidements (5a ; 5b ; 5c ; 5d), qui réduisent la rigidité, étant prévus dans le matériau de la deuxième section (3), **caractérisé en ce que** des évidements (5a ; 5b) sont prévus dans la première section (2) pourvue d'une rigidité supérieure et dans la deuxième section (3) pourvue d'une rigidité inférieure, la densité des évidements (5a ; 5b) étant plus élevée dans la deuxième section (3).

2. Profilé d'étanchéité ou de protection de bord (1 ; 1') selon la revendication 1, **caractérisé en ce que** le profilé d'étanchéité ou de protection de bord (1 ; 1') présente, dans la direction longitudinale, au moins par sections, un contour externe constant et est en particulier réalisé comme profilé extrudé.

3. Profilé d'étanchéité ou de protection de bord (1 ; 1') selon la revendication 1 ou 2, **caractérisé en ce que** des sections (8a ; 8b ; 8c) pourvues d'une rigidité différente sont adjacentes les unes aux autres dans la section transversale et/ou dans la direction longitudinale du profilé d'étanchéité ou de protection de bord (1 ; 1').

4. Profilé d'étanchéité ou de protection de bord (1 ; 1') selon l'une des revendications précédentes, **caractérisé en ce que** les évidements (5a ; 5b ; 5c ; 5d) sont formés par des chambres ouvertes et/ou fermées vers l'extérieur et sont en particulier réalisés sous forme d'une sphère, d'un ovale, d'un cylindre ou d'un canal.

5. Profilé d'étanchéité ou de protection de bord (1 ; 1') selon l'une des revendications précédentes, **caractérisé en ce que** les évidements (5a ; 5b ; 5c ; 5d) sont agencés à une distance d'au moins 0,05 mm, en particulier d'au moins 0,1 mm d'un contour externe du profilé d'étanchéité ou de protection de bord (1 ; 1').

6. Profilé d'étanchéité ou de protection de bord (1) selon l'une des revendications précédentes, **caractérisé en ce que** la deuxième section (3) est formée par une lèvre (6) saillante dans la section transversale.

7. Profilé d'étanchéité ou de protection de bord (1') selon l'une des revendications précédentes, **caractérisé par** une section de fixation (9) de préférence en forme de L ou de U dans la section transversale, la deuxième section (3) pourvue d'une rigidité inférieure étant agencée dans une branche (11a) de la section de fixation (9), en particulier de manière adjacente à une face interne.

8. Procédé de fabrication d'un profilé d'étanchéité ou de protection de bord selon l'une des revendications 1 à 7, comprenant au moins une première section (2) pourvue d'une première rigidité et au moins une deuxième section (3) pourvue d'une deuxième rigidité inférieure à la première rigidité,
les sections (2 ; 3) étant formées par extrusion à partir du même matériau, **caractérisé en ce que** lors de l'extrusion, des évidements (5a ; 5b) sont prévus dans le matériau de la première section (5) et de la deuxième section (3), la densité des évidements (5a ; 5b) étant plus élevée dans la deuxième section (3).

9. Procédé selon la revendication 8, **caractérisé en ce que** les évidements (5a ; 5b) sont formés dans un outil d'extrusion (14) par au moins un corps de refoulement, en particulier une tresse à fil (16) ou par une aiguille, qui est de préférence mobile dans la direction longitudinale du profilé d'étanchéité ou de protection de bord (1 ; 1') ou sous un angle par rapport à celle-ci et/ou par une unité d'injection qui alimente un gaz, un fluide et/ou un corps solide.

10. Outil d'extrusion (14) pour l'extrusion d'un profilé d'étanchéité ou de protection de bord (1 ; 1') selon l'une des revendications 1 à 7, présentant une filière (13), à travers laquelle le matériau du profilé d'étanchéité ou de protection de bord (1 ; 1') peut être expulsé lors de l'extrusion et
au moins un corps de refoulement (16) pour le refoulement de matériau, **caractérisé en ce que** plusieurs corps de refoulement (16) sont prévus pour la formation des évidements (5a ; 5b) dans la première section (2) et la deuxième section (3) et sont réalisés sous forme de tresse à fil (16) et/ou d'aiguille.

11. Outil d'extrusion (14) selon la revendication 10, **caractérisé en ce que** le corps de refoulement (16) est agencé dans la filière (13) ou de manière adjacente à celle-ci.

12. Outil d'extrusion (14) selon la revendication 10 ou 11, **caractérisé en ce que** l'unité d'injection est agencée dans la filière (13).

13. Outil d'extrusion (14) selon l'une des revendications 10 à 12, **caractérisé en ce que** la tresse à fil (16) s'étend également à l'extérieur de la filière (13).

14. Outil d'extrusion (14) selon l'une des revendications 10 à 13, **caractérisé en ce que** l'aiguille est mobile dans la direction d'extrusion ou sous un angle par rapport à celle-ci, de préférence à angle droit par rapport à la direction d'extrusion.
